# EUROPEAN PATENT SPECIFICATION

(11) **EP 4 094 559 B1**
(45) Date of publication and mention of the grant of the patent: **02.07.2025**
(21) Application number: 22174863.5
(22) Date of filing: 23.05.2022
(51) Int. Cl.: A01B 69/00, A01B 79/00, G05D 1/00

(54) **WORK METHOD AND WORK SYSTEM**
ARBEITSVERFAHREN UND ARBEITSSYSTEM
PROCÉDÉ DE TRAVAIL ET SYSTÈME DE TRAVAIL

(30) Priority: 26.05.2021 JP 2021088418
(43) Date of publication of application: 30.11.2022
(73) Proprietor: Yanmar Holdings Co., Ltd., Osaka-shi, Osaka (JP)
(72) Inventor: NISHII, Yasuto, Osaka (JP); MURAYAMA, Masaaki, Osaka (JP)
(74) Representative: Novagraaf International SA

(56) References cited:
- US-A1- 2007 233 348
- US-A1- 2017 280 614
- US-A1- 2019 227 561

## Description

### TECHNICAL FIELD

The present invention relates to a work method of a plurality of work vehicles including at least one automatic traveling work vehicle capable of automatically traveling based on a travel path created in a farm field, and also relates to a work vehicle and a work system that perform any work based on the work method.

### BACKGROUND ART

Conventional work vehicles such as combine harvester and tractor that work while traveling in a farm field include an automatic traveling work vehicle that automatically travels according a preliminarily created travel path, based on any own machine positional information acquired using a satellite positioning system such as GPS. Note that a worker, as the case may be, uses a plurality of work vehicles thereby to perform the work in the farm field.

For example, a work vehicle automatic traveling system in Patent Document 1 includes an own vehicle position calculator that calculates an own vehicle position, a path manager that calculates and readably stores a travel path element group which is a cluster of a large number of travel path elements constituting travel paths covering a to-be-worked-on area, and a path element selector that, from the travel path element group, sequentially selects a to-be-travelled-next travel path element based on the own vehicle position and any other vehicle's working traveling state. Document US2007233348A1 relates to a method for controlling several agricultural machine systems during operation on a territory.

### PRIOR ART DOCUMENT

### PATENT DOCUMENT

Patent Document 1: Japanese Unexamined Patent Application Publication No. 2018-099042

### SUMMARY OF INVENTION

### TECHNICAL PROBLEM

By the way, in the conventional technology such as the one in the Patent Document 1; so as to preliminarily prevent any extraordinary approach or collision between harvesters as a plurality of work vehicles, a single farm field is sectionalized into a plurality of sections by a middle division, and for each sectionalized section, any work by a master harvester and any work by a slave harvester are separated. In the conventional technology, however, the farm field is sectionalized into a plurality of sections thereby to separate the work vehicles to respective sections, without considering the work capacity of each of the work machines possessed by a plurality of work vehicles. Due to the above, each work vehicle often travels and works without fully demonstrating its own work capacity in the separated section, which may reduce travel efficiency and work efficiency.

It is an object of the present invention to provide a work method, a work vehicle and a work system that enable a plurality of work vehicles to efficiently travel and work.

### SOLUTION TO PROBLEM

The invention is defined in claim 1. A work method not covered by the claimed invention is a work method of a plurality of work vehicles including at least one automatic traveling work vehicle capable of automatically traveling based on a travel path created in a farm field, the method including: an allocating process that divides a work area of the farm field into a plurality of work blocks based on each of the work vehicles, and that allocates any of the plurality of work vehicles to each of the work blocks, and a working process that allows the plurality of work vehicles to perform any work of the plurality of work blocks.

A work vehicle not covered by the claimed invention is a work vehicle capable of automatically traveling based on a travel path created in a farm field, the work vehicle including: a work allocator that divides a work area of the farm field into a plurality of work blocks based on a plurality of work vehicles including the work vehicle and another work vehicle, and that allocates any of the plurality of work vehicles to each of the work blocks, and a self-driving controller that performs a work of the work blocks' work block allocated to the work vehicle.

A work system not covered by the claimed invention is a work system of a plurality of work vehicles including at least one automatic traveling work vehicle capable of automatically traveling based on a travel path created in a farm field, the work system including: a work allocator that divides a work area of the farm field into a plurality of work blocks based on each of the work vehicles, and that allocates any of the plurality of work vehicles to each of the work blocks, wherein the plurality of work vehicles perform a work of the respectively allocated work blocks.

### ADVANTAGEOUS EFFECTS OF INVENTION

The present invention provides a work method according to claim 1 and a work system according to claim 2 that enable a plurality of work vehicles to efficiently travel and work.

### BRIEF DESCRIPTION OF DRAWINGS

FIG. 1 is a block diagram showing a work system having a work vehicle as a combine harvester according to a first embodiment not covered by the claimed invention.
FIG. 2 is a side view showing the work vehicle as the combine harvester according to the first embodiment.
FIG. 3 is a block diagram showing the work vehicle as the combine harvester according to the first embodiment.
FIG. 4 is a plan view showing an example of a work allocating screen displayed on a portable terminal in the work vehicle as the combine harvester according to the first embodiment.
FIG. 5 is a plan view showing an example of a travel path creating screen displayed on the portable terminal in the work vehicle as the combine harvester according to the first embodiment.
FIG. 6 is a flowchart showing an operation example of the work vehicle as the combine harvester according to the first embodiment.
FIG. 7 is a plan view showing an example of the work allocating screen displayed on the portable terminal in the work vehicle as the combine harvester according to an improved example of the first embodiment.
FIG. 8 is a plan view showing an example of head land forming in the farm field by the work vehicle as the combine harvester according to the improved example of the first embodiment.
FIG. 9 is a plan view showing an example of the work allocating screen displayed on the portable terminal in the work vehicle as the combine harvester according to a second embodiment not covered by the claimed invention.

### DESCRIPTION OF EMBODIMENTS

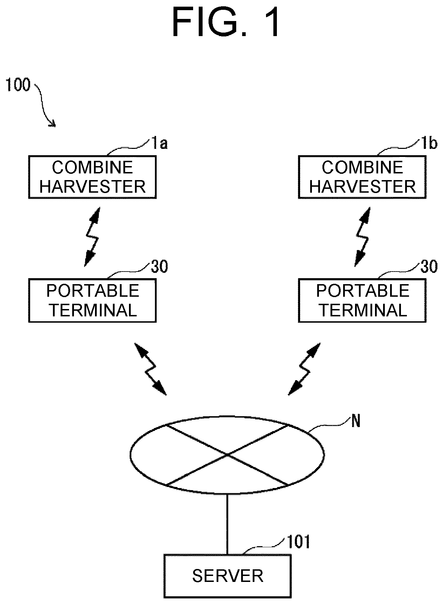

A work system 100 according to a first embodiment will be described with reference to the drawings. As shown in FIG. 1, the work system 100 includes combine harvesters 1a and 1b as a plurality of work vehicles, and a server 101 that manages the combine harvesters 1a and 1b. The work system 100 divides a work area of a farm field into a plurality of work blocks, and the combine harvester 1a or 1b is allocated to each work block so as to work in the work block, enabling a cooperative work where the combine harvesters 1a and 1b simultaneously work on different work blocks in the farm field.

A self-driving and a manual driving allow the combine harvesters 1a and 1b to travel in the to-be-worked-on farm field and to perform harvesting and any other work so as to harvest crops from grain stalks planted in the farm field. It is assumed that, in the first embodiment, the combine harvester 1a is an automatic traveling work vehicle capable of automatically traveling based on a preliminarily -created travel path, and the combine harvester 1b is a work vehicle that travels in response to a manual driving by a worker.

Also, the server 101 is communicably connected to respective portable terminals 30 of the combine harvesters 1a and 1b and connected via a predetermined network N such as the Internet. The server 101 stores pieces of own machine information of the to-be-managed combine harvesters 1a and 1b, such as respective models, work widths (i.e., the number of harvestable strips), and turning radius.

Next, the combine harvesters 1a and 1b as the work vehicle will be described. Since the combine harvester 1b has the same configuration as the combine harvester 1a, the combine harvester 1a will be described below for convenience.

For a plurality of strip rows of grain stalks, the combine harvester 1a performs harvesting work while traveling one route having the strip row within the number of harvestable strips (e.g., six strips). The present invention does not limit the number of harvestable strips.

The combine harvester 1a can be set to either a manual traveling mode or an automatic traveling mode. The combine harvester 1a is so configured as to perform, with the manual traveling mode being set, a manual harvesting traveling that performs harvesting while traveling in response to an operator 9's manual driving by the worker.

Meanwhile, the combine harvester 1a is so configured as to perform, with the automatic traveling mode being set, an automatic harvesting traveling while automatically traveling according to the preliminarily - created travel path. For example, the combine harvester 1a performs the automatic harvesting traveling according to the travel path of traveling patterns such as a reciprocating harvesting that reciprocates a plurality of routes in the farm field's area having yet-to-be-harvested grain stalks in (hereinafter referred to as yet-to-be-harvested area), and a turning harvesting that repeats a peripheral turning of a route along the inner circumference of the yet-to-be-harvested area while shifting the peripheral turning to the center.

Before performing the automatic harvesting traveling, the combine harvester 1a performs the harvesting traveling by peripherally turning along an external peripheral shape of the farm field thereby to form a head land in the farm field, and the inside of the head land is set as the work area for the automatic harvesting traveling. Until the head land, relative to the work area, becomes spacious enough to allow a U-turn, a fishtail turn, or the like, the combine harvester 1a may perform the harvesting traveling that peripherally turns along the external peripheral shape of the farm field. Also, for the work area of the farm field, the combine harvester 1a sets a predetermined number of middle divisions along a strip direction, divides the work area into a plurality of work blocks by the middle divisions, allocates the combine harvester 1a or 1b to each work block, and performs the automatic harvesting traveling of the work block allocated to the combine harvester 1a. Also, the combine harvester 1b performs the manual harvesting traveling in the work block allocated to the combine harvester 1b.

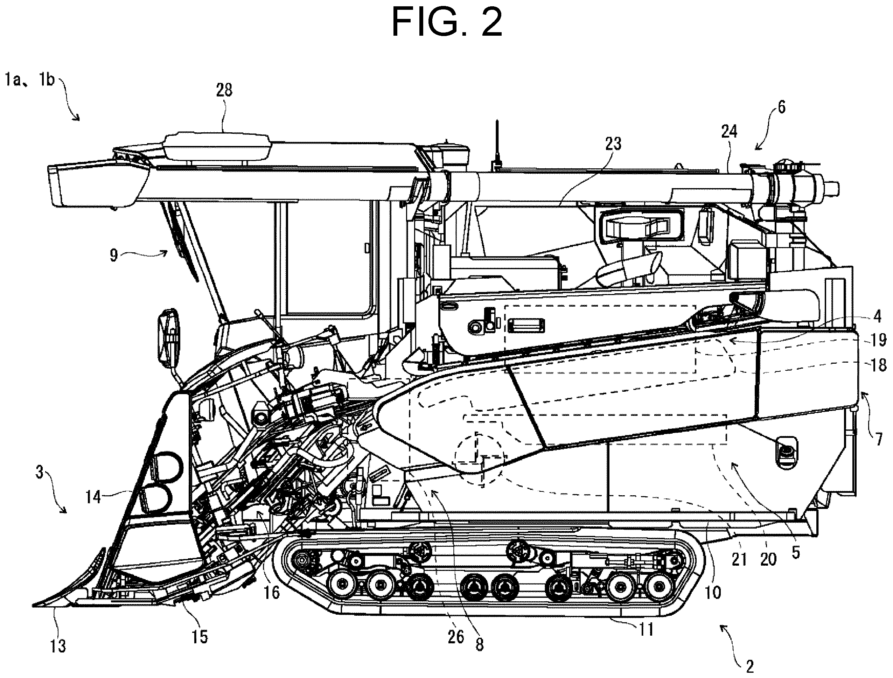

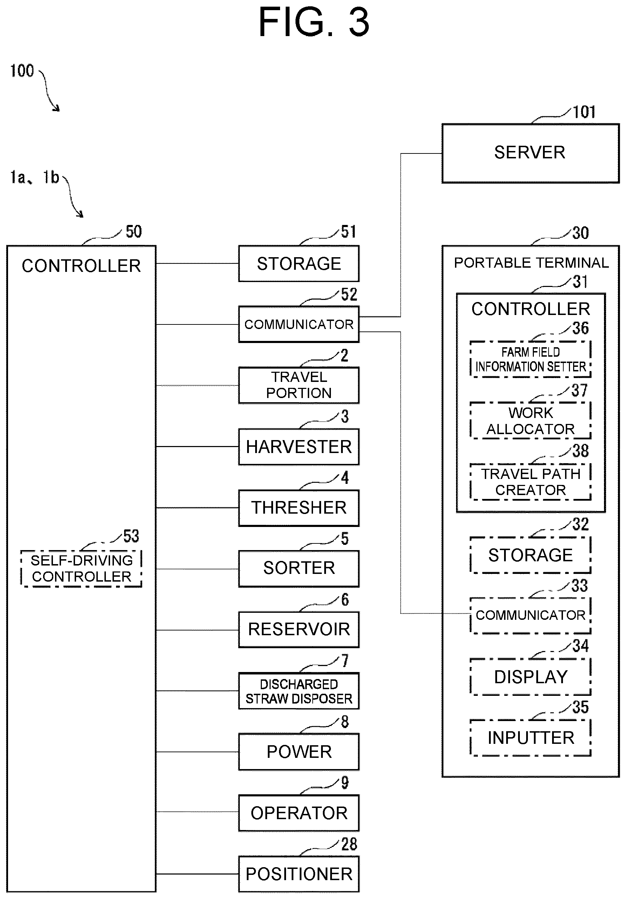

As shown in FIG. 2, the combine harvester 1a includes a travel portion 2, a harvester 3, a thresher 4, a sorter 5, a reservoir 6, a discharged straw disposer 7, a power 8, and the operator 9, and is composed of a so-called self-threshing type combine harvester. Also, the combine harvester 1a has a controller 50 (FIG. 3) that controls various components and various functions of the combine harvester 1a. While traveling by means of the travel portion 2, the combine harvester 1a threshes, with the thresher 4, the grain stalks harvested by the harvester 3, and sorts grains with the sorter 5, thereby to reserve the grains in the reservoir 6. With the discharged straw disposer 7, the combine harvester 1a disposes any discharged straw after the threshing. With a power supplied by the power 8, the combine harvester 1a drives the travel portion 2, the harvester 3, the thresher 4, the sorter 5, the reservoir 6, and the discharged straw disposer 7.

The travel portion 2 is provided below a machine body frame 10, and includes a pair of crawler-type traveling units 11 on right and left side and a power transmission mechanism (not shown). With a power (e.g., rotational power) transmitted from an engine 26 of the power 8, the travel portion 2 rotates a crawler of the crawler-type traveling unit 11, thereby to cause the combine harvester 1a to travel forward and backward and turn to the left and right. The power transmission mechanism is composed of a transmission or the like and sends the power (rotational power) of the power 8 to the crawler-type traveling unit 11, and can change the speed of the rotational power.

The harvester 3 is provided in front of the travel portion 2 and performs the harvesting work on the strip row within the number of harvestable strips, and the harvesting width is determined by the number of to-be-harvested strip rows. The harvester 3 has a divider 13, a puller-upper 14, a cutter 15, and a conveyer 16. The divider 13 divides grain stalks in the farm field per strip, and guides, to the puller-upper 14, the grain stalks per a predetermined number of strips within the number of harvestable strips. The puller-upper 14 pulls up the grain stalks guided by the divider 13. The cutter 15 cuts the grain stalks pulled up by the puller-upper 14. To the thresher 4, the conveyer 16 conveys the grain stalks cut with the cutter 15.

The thresher 4 is provided behind the harvester 3. The thresher 4 includes a feed chain 18 and a handling drum 19. The feed chain 18, for threshing, conveys the grain stalks conveyed from the conveyer 16 of the harvester 3, and further conveys the threshed grain stalks, that is, the discharged straw, to the discharged straw disposer 7. The handling drum 19 threshes the grain stalks being conveyed by the feed chain 18.

The sorter 5 is provided below the thresher 4. The sorter 5 includes a swing sorter 20, an air blast sorter 21, a grain conveyer (not shown), and a straw dust discharger (not shown). The swing sorter 20 sifts a threshed matter that falls from the thresher 4 and sorts the threshed matter into grain, straw dust, etc. Into the grain, straw dust, etc., the air blast sorter 21, with an air blast, further sorts the threshed matter sorted by the swing sorter 20. To the reservoir 6, the grain conveyer conveys the grain sorted by the swing sorter 20 and the air blast sorter 21. To outside the machine, the straw dust discharger discharges the straw dust or the like sorted by the swing sorter 20 and the air blast sorter 21.

The reservoir 6 is provided on the right side of the thresher 4. The reservoir 6 includes a grain tank 23 and a discharger 24. The grain tank 23 reserves the grain conveyed from the sorter 5. The discharger 24 is composed of an auger or the like, and discharges, to any place, the grain stored in the grain tank 23. The discharger 24 performs a discharging work automatically when being controlled by the controller 50 or manually in response to the operation of the operator 9.

The discharged straw disposer 7 is provided behind the thresher 4. The discharged straw disposer 7 includes a discharged straw conveyer (not shown) and a discharged straw cutter (not shown). For example, to outside the machine (e.g., behind or below the combine harvester 1a), the discharged straw disposer 7, with the discharged straw conveyer, discharges any discharged straw as it is, which was conveyed from the feed chain 18 of the thresher 4. Alternatively, the discharged straw disposer 7 conveys, with the discharged straw conveyer, the straw to the straw cutter, cuts the straw with the straw cutter, and thereafter discharges the straw to outside the machine (e.g., to behind the combine harvester 1a).

The power 8 is provided above the travel portion 2 and in front of the reservoir 6. The power 8 includes the engine 26 that generates the rotational power. To the travel portion 2, the harvester 3, the thresher 4, the sorter 5, the reservoir 6, and the discharged straw disposer 7, the power 8 sends the rotational power generated by the engine 26. Also, the combine harvester 1a includes a fuel tank (not shown) that contains a fuel to be supplied to the engine 26 of the power 8.

The operator 9 is provided above the power 8. Around a driver's seat which is a seat on which the worker sits, the operator 9 includes, as an operating tool for operating the traveling of the combine harvester 1a, a steering wheel for instructing to turn a machine body of the combine harvester 1a, and a main speed lever and an auxiliary speed lever for instructing to change the combine harvester 1a's speed forward and backward. The manual traveling of the combine harvester 1a is performed by the travel portion 2 which has accepted an operation of the steering wheel of the operator 9 and operations of the main speed lever and auxiliary speed lever. Also, the operator 9 includes a mechanism for operating the harvesting work by the harvester 3, the threshing work by the thresher 4, and the discharging work by the discharger 24 of the reservoir 6.

As shown in FIG. 3, the combine harvester 1a includes a positioner 28 that uses a satellite positioning system such as GPS thereby to acquire any positional information of the combine harvester 1a. The positioner 28 receives a positioning signal from a positioning satellite via a positioning antenna, and, based on the positioning signal, acquires the positional information of the positioner 28, i.e., a positional information of the combine harvester 1a.

Also, the combine harvester 1a may be so configured as to be communicable with a base station (not shown) provided at the furrow or the like around the farm field. The base station receives the positioning signal from the positioning satellite via the positioning antenna, and, based on the positioning signal, acquires the positional information of the base station. To the combine harvester 1a (e.g., positioner 28), the base station sends any correction information that is based on the positional information of the base station. The combine harvester 1a (e.g., positioner 28) receives the correction information from the base station, and based on the correction information, corrects the information position of the positioner 28, i.e., the positional information of the combine harvester 1a.

As shown in FIG. 3, the combine harvester 1a includes the portable terminal 30 that can remotely control the combine harvester 1a. The portable terminal 30 is one of the components of the combine harvester 1a, is held by the worker, and is communicably connected to the combine harvester 1a. The portable terminal 30 is composed of, for example, a tablet terminal with a touch screen, a laptop personal computer, and the like.

As shown in FIG. 3, the portable terminal 30 has a controller 31 is composed of a computer such as a CPU, and the controller 31 is connected to a storage 32 such as ROM, RAM, hard disk drive and flash memory, and a communicator 33 that communicates with an external device. Also, the portable terminal 30 includes a display 34, such as a touch screen or monitor, for displaying various information and outputting the various information to the worker, and an inputter 35 such as touch screen and operation key for accepting an inputting operation of various information from the worker. Also, any operator similar to the portable terminal 30 may be provided in the operator 9.

The storage 32 stores any program and data for controlling various components and various functions of the portable terminal 30, and, based on the program and data stored in the storage 32, the controller 31 executes an arithmetic process thereby to control the various components and various functions of the portable terminal 30. The storage 32 stores, for example, any farm field information of the to-be-worked-on farm field of the combine harvester 1a. The farm field information includes the shape, size and positional information (coordinates, etc.) of a farm field edge that constitutes the farm field's external circumference, as well as the shape, size and positional information (coordinates, etc.) of the work area of the farm field.

Also, the storage 32 stores any own machine information of the combine harvester 1a, such as the model, the work width, the number of harvestable strips, the turning radius, and the grain tank 23's available capacity. Also, the storage 32 stores any own machine information of the combine harvester 1b that works in cooperation with the combine harvester 1a in the farm field. For example, the combine harvester 1a receives the combine harvester 1b's own machine information from the server 101, and stores the own machine information in the storage 32.

Via a wireless communication antenna, the communicator 33 is communicably connected to a communicator 52 of the combine harvester 1a and to the server 101. The controller 31 controls the communicator 33 thereby to wirelessly communicate with the combine harvester 1a and the server 101, and sends and receives various information to and from the combine harvester 1a and the server 101.

For example, the portable terminal 30 displays, on the display 34, a screen (e.g., a home screen or a mode setting screen) on which any of the manual traveling mode and automatic traveling mode of the combine harvester 1a can be set, and sends the set travel mode to the combine harvester 1a in response to the worker's operation.

Regarding the farm field information related to the to-be-worked-on farm field, the portable terminal 30 is so configured as to accept an inputting operation via the inputter 35, and displays, for example, a farm field information setting screen where the farm field information can be set. In the farm field information setting screen, the portable terminal 30, while displaying a farm field map that is based on the farm field information, can display, on the farm field map, the travel path of the combine harvester 1a in such a manner that a progressing direction can be seen. As the farm field information, the shape, size and positional information, etc. of the work area of the farm field where the automatic harvesting traveling is performed are set based on the combine harvester 1a's positional information received from the combine harvester 1a during traveling, when the combine harvester 1a forms the head land by the harvesting traveling along the external peripheral shape of the farm field.

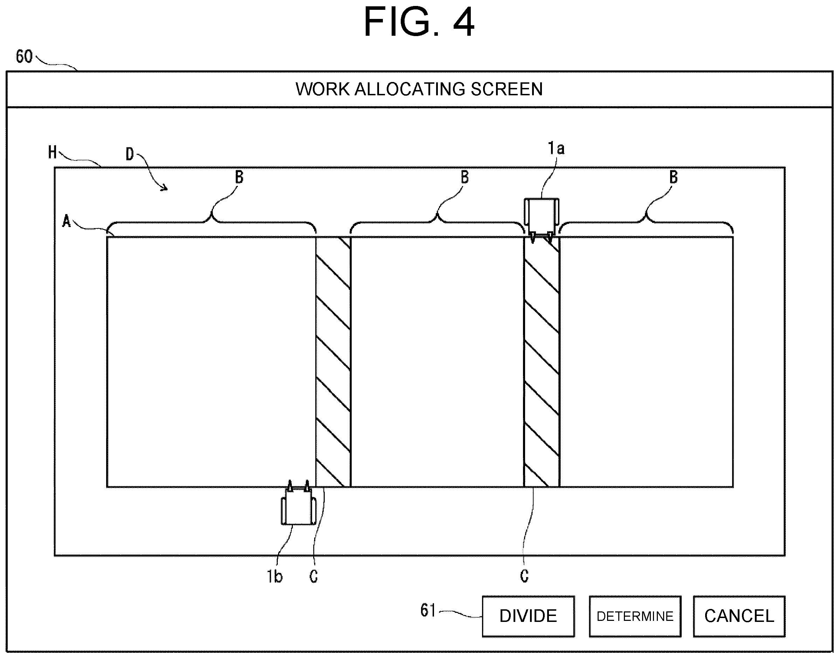

As shown in FIG. 4, for example, the portable terminal 30 divides a work area A of a farm field H where the automatic harvesting traveling is performed into a plurality of work blocks B, and displays, on the display 34, a work allocating screen 60 for allocating the combine harvester 1a or 1b to each work block B. For example, when the shape, size and positional information, etc. of the work area A of the farm field H are set as the farm field information as described above, the portable terminal 30 can display the work allocating screen 60 of the above work area A. Also, the work allocating screen 60 may be unified with the farm field information setting screen described above.

On the work allocating screen 60, the portable terminal 30 displays the farm field map showing the external peripheral shape of the farm field H based on the farm field information, and also displays, on the farm field map, the work area A for performing the automatic harvesting traveling and a head land D that is formed around the work area A. On the work allocating screen 60, the portable terminal 30 accepts selecting of the combine harvester 1a or 1b that performs the work of the farm field H, and acquiring of the own machine information of the selected combine harvester 1a or 1b. For example, the combine harvester 1a that, as the work vehicle to work in the farm field H, corresponds to the portable terminal 30 is preliminarily selected, and the own machine information of the combine harvester 1a is acquired from the storage 32; also, when the combine harvester 1b is selected in response to the worker's operation, the own machine information of the combine harvester 1b is acquired from the server 101. The work allocating screen 60 also illustrates the selected combine harvesters 1a and 1b. Alternatively, it is permitted that the work allocating screen 60 enables an inputting operation of the work width or the number of harvestable strips as the own machine information, and acquires the work width or the number of harvestable strips according to an input value.

Also, it is preferable that the portable terminal 30 accepts, on the work allocating screen 60, an operation of dividing the work area A, and operably displays, for example, a dividing button 61 for instructing to divide the work area A. The portable terminal 30, in response to the operation of the dividing button 61, sets the predetermined number of middle divisions C (see hatching in FIG. 4) to the work area A of the farm field H, and then, on the work allocating screen 60, displays, on the farm field map, a plurality of work blocks B with the work area A divided by the middle division C.

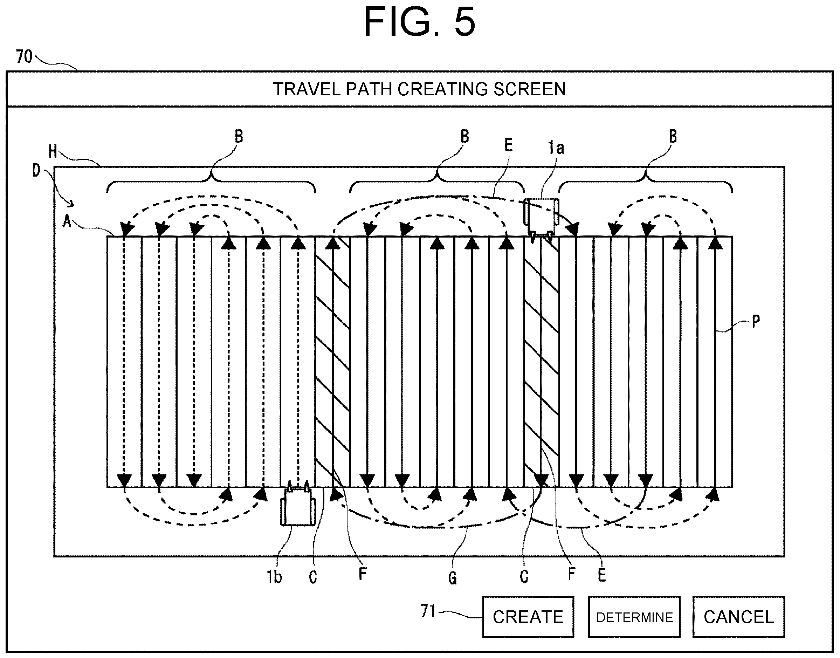

Also, for example, as shown in FIG. 5, the portable terminal 30 displays, on the display 34, a travel path creating screen 70 that creates, for the work area A of the farm field H, a travel path P of the automatic harvesting traveling. The travel path creating screen 70 may be unified with the farm field information setting screen and/or the work allocating screen 60 described above. In the travel path creating screen 70 shown in FIG. 5, the travel path P, in each work block B, has a path, which makes the harvesting traveling in each route, indicated by a solid line, and an empty traveling path, which transfers between two routes, indicated by a broken line. In FIG. 5, the path where the manually driven combine harvester 1b makes the harvesting traveling is indicated by a dotted line, but the above path does not have to be displayed on the travel path creating screen 70.

On the travel path creating screen 70, the portable terminal 30 accepts a selecting operation of the reciprocating harvesting or the turning harvesting as the traveling pattern of the automatic harvesting traveling of the combine harvester 1a. Also, it is preferable that the portable terminal 30 accepts, on the travel path creating screen 70, an operation of creating the travel path P, and operably displays, for example, a creating button 71 for instructing to create the travel path P. According to the operation of the creating button 71, the portable terminal 30 creates the travel path P of the automatic harvesting traveling in the work block B of the work area A of the farm field H allocated to the combine harvester 1a. In the present embodiment, not only the travel path P of each work block B, but also a transfer path E for the transferring between two work blocks B (see single dotted line in FIG. 5), a middle division path F for forming each middle division C, and a middle division transfer path G for the transferring through the head land D at the time of forming the middle division are also created.

When the combine harvester 1a performs the automatic harvesting traveling, the portable terminal 30 displays, on the display 34, a work screen of the automatic harvesting traveling. The work screen operably displays buttons, for example, a start button for instructing to start the automatic harvesting traveling and a stop button for tentatively stopping the machine body. Also, a current position of the combine harvester 1a is displayed on the work screen in an obvious manner, together with the to-be-automatically-harvested-traveled farm field and the travel path. With the start button operated on the work screen, the controller 31 sends, to the combine harvester 1a, the instruction to start the automatic harvesting traveling.

For realizing the above functions, the controller 31 of the portable terminal 30 executes the program stored in the storage 32 thereby to operate as a farm field information setter 36, a work allocator 37, and a travel path creator 38. Also, the work allocator 37 and the travel path creator 38 realize an allocating process and travel path creating process of the work method according to the present invention.

The farm field information setter 36 automatically or manually sets the farm field information related to the to-be-worked-on farm field and stores the farm field information in the storage 32, and, via the communicator 33, sends the farm field information to the combine harvester 1a. For example, the farm field information setter 36 manually sets farm field information in response to the operation of inputting the farm field information to the farm field information setting screen of the portable terminal 30. Alternatively, it is permitted that the farm field information setter 36 receives, by a communication with the server 101, the farm field information stored by the server 101 thereby to automatically set the farm field information. Also, with the farm field information setting screen of the portable terminal 30, the farm field information setter 36 may allow the farm field information, which is received from the server 101, to be editable.

As another example, it is permitted that the farm field information setter 36 acquires a farm field image of the shot to-be-worked-on farm field, and sets the farm field information based on a result of analyzing the farm field image. Also, it is permitted that the farm field information setter 36 matches the farm field information set according to the operation of the portable terminal 30 and the farm field information received from the server 101, with the farm field information analyzed from the farm field image, thereby to acquire more accurate farm field information.

Regarding the farm field image, an image taken by a machine body camera provided in the combine harvester 1a may be received by the communicator 33 or may be taken with a portable camera provided in the portable terminal 30, or an image taken by an aerial camera provided in a drone or the like may be received by the communicator 33. The farm field information setter 36 may analyze the farm field information from farm field image from at least one of the machine body camera, the portable camera and the aerial camera. Also, the controller 31 may have the display 34 display the taken farm field image, or may send the taken farm field image to the combine harvester 1a and have a monitor of the operator 9 display the sent farm field image.

The work allocator 37 divides the work area A of the farm field H into a plurality of work blocks B based on each of the combine harvesters 1a and 1b to perform cooperative work in the farm field H, and allocates any of the combine harvesters 1a and 1b to each work block B. One or more work blocks B are allocated to the combine harvester 1a, and one or more work blocks B different from those of the combine harvester 1a are allocated to the combine harvester 1b. In response to, for example, an operation of the dividing button 61 of the work allocating screen 60 of the display 34, the work allocator 37 divides the work area A.

First, the work allocator 37 sets, to the work area A, the predetermined number of middle divisions C along the strip direction of the farm field H, thereby to divide the work area A into a plurality of work blocks B that are parallel in the direction of intersection with the strip direction, i.e., in a width direction. At this time, based on the own machine information of the combine harvesters 1a and 1b, the number of middle divisions of the middle division C (the number of blocks of a plurality of work blocks B) and a block width of each work block B (the number of block strip) are determined in a manner to optimize the combine harvesters 1a and 1b's harvesting traveling in the work area A.

By the way, the turning between adjacent routes within each work block B may involve retreating and turning back, which increases the turning time and turning distance. Therefore, when the number of middle divisions, that is, the number of blocks is large, the turns between adjacent routes increases as a whole, resulting in longer turning time and longer turning distance. Meanwhile, when the number of middle divisions is small, the block width is large, which increases an empty traveling distance in the head land D in each work block B.

Therefore, the work allocator 37, for example, acquires the work width (the number of harvestable strips) of the combine harvesters 1a and 1b as the own machine information of the combine harvesters 1a and 1b. The work allocator 37, for example, based on the own machine information of the combine harvesters 1a and 1b, lists various candidates for the block width (the number of block strips) that is an integer multiple of the work width (the number of harvestable strips) of the combine harvester 1a, and various candidates for the block width (the number of block strips) that is an integer multiple of the work width (the number of harvestable strips) of the combine harvester 1b. Then, the work allocator 37, in view of the trade-off between the number of middle divisions and the block width, verifies the optimum combination including one or more block widths for the combine harvester 1a and one or more block widths for the combine harvester 1b, so that the turning time and turning distance between adjacent routes in each work block B, as well as the empty traveling distance of the head land D are reduced, thereby to determine the number of middle divisions and the block width.

The work allocator 37 calculates any middle division information such as the shape, size, and positional information (coordinates, etc.) of each of the determined number of middle divisions C, and stores the middle division information in the storage 32, and sends the middle division information to the combine harvester 1a via the communicator 33. When setting two or more middle divisions C, the work allocator 37 determines the middle division forming order for forming the respective middle divisions C and includes the middle division forming order in the middle division information. For example, the work allocator 37 may so determine the middle division forming order that the respective middle divisions C are formed in the order of proximity to the combine harvester 1a's position at the end of the head land forming or to the combine harvester 1a's current position.

Then, the work allocator 37 uses the number of middle divisions and the block width which are determined based on the respective own machine information of the combine harvesters 1a and 1b thereby to calculate pieces of the work information, such as the shape, size and positional information (coordinates, etc.) of each work block, which are seen when the work area A of the farm field H is divided into a plurality of work blocks B. In other words, the work allocator 37 divides the work area A into one or more work blocks B having the block width for the combine harvester 1a, and one or more work blocks B having the block width for the combine harvester 1b.

Next, the work allocator 37 allocates any of the combine harvesters 1a and 1b to each divided work block B. In this case, the combine harvester 1a is allocated to one or more work blocks B having the block width for the combine harvester 1a, and combine harvester 1b is allocated to one or more work blocks B having the block width for the combine harvester 1b.

It is permitted that, when the combine harvesters 1a and 1b are different in the number of harvestable strips (work width), the work allocator 37 divides the work area A into the work blocks B of different sizes, and allocates the combine harvester 1a or 1b, that has the larger number of harvestable strips (work width), to the larger work block B. Specifically, since the block width of work block B is determined according to the work width of the combine harvester 1a or 1b, the work allocator 37 sets the work block B with a larger block width as the work width is larger. For example, when the work width of the combine harvester 1a is larger than the work width of the combine harvester 1b, the work block B allocated to the combine harvester 1a B will have a larger block width than the work block B allocated to the combine harvester 1b.

The work allocator 37 stores, in the storage 32, the work information of each work block B allocated to the combine harvester 1a, and sends the work information to the combine harvester 1a via the communicator 33. Also, the work allocator 37 stores, in the storage 32, the work information of each work block B allocated to the combine harvester 1b, and sends the work information to the combine harvester 1b via the communicator 33.

When two or more work blocks B are allocated to the combine harvester 1a, the work allocator 37 determines the work order in which the automatic harvesting traveling of each work block B is performed, and includes the work order in the work information of the combine harvester 1a. For example, the work allocator 37 may determine the work order in the order of each work block B's proximity to the combine harvester 1a's position at the end of the head land forming or to the combine harvester 1a's current position.

The travel path creator 38 creates the travel path P to be referred to for the automatic traveling and automatic harvesting (automatic harvesting traveling) by the self-driven combine harvester 1a in the farm field H and stores the travel path P in a storage 51, and sends the travel path P to the combine harvester 1a via the communicator 33. The travel path creator 38, for example, according to the operation of the creating button 71 of the travel path creating screen 70 of the display 34, creates the travel path P. The travel path includes not only any travel setting related to the automatic traveling, but also any work setting related to any work such as the automatic harvesting. In addition to the travel position in the farm field H, the travel setting includes the progressing direction (steering direction, and forward or backward) and a set vehicle speed at each travel position. The work setting includes any information about the harvesting traveling or stop at each travel position, the harvesting speed and harvesting height, the number of harvesting strips, and any other work.

So as to have the combine harvester 1a perform a section harvesting traveling that forms each middle division C in the work area A, the travel path creator 38, before the harvesting traveling in the work area A, creates the middle division path F, which is for the section harvesting traveling in each middle division C, based on the middle division information set by the work allocator 37. Also, at the time of forming the middle division, the travel path creator 38 creates the middle division transfer path G for the transferring between the two middle divisions C in the head land D. Also, the middle division path F and the middle division transfer path G may be included in the middle division information.

For each work block B allocated to the combine harvester 1a, the travel path creator 38 linearly creates a route for harvesting while traveling in the forward direction, according to the traveling pattern (reciprocating harvesting or turning harvesting) selected by the operation of the portable terminal 30, etc., and combines a plurality of routes thereby to create the travel path P. Also, the travel path creator 38 creates the empty traveling path for turning and traveling in the head land between two consecutive routes in each work block B. For example, in the reciprocating harvesting's travel path P including a plurality of routes, the travel path creator 38 normally creates the empty traveling path for a U-turn between the routes, and, for between the routes where the combine harvester 1a's turning radius does not enable the U-turn, creates the empty traveling path that makes a fishtail turn.

As described above, for each work block B, the travel path creator 38 creates the travel path P that includes a plurality of routes and the empty traveling path between respective routes. Also, in the travel path P of each work block B, the travel path creator 38 sets a start position where the automatic harvesting traveling starts and an end position where the automatic harvesting traveling is ended. The travel path creator 38 stores, in the storage 51, the travel path P, transfer path E, middle division path F, and middle division transfer path G of each work block B, and sends the above stored items to the combine harvester 1a via the communicator 33.

Also, the travel path creator 38 creates the transfer path E that transfers in the head land D toward the start position of each work block B allocated to the combine harvester 1a and stores the transfer path E in the storage 32, and sends the transfer path E to the combine harvester 1b via the communicator 33. For the work block B where the combine harvester 1a performs the first automatic harvesting traveling in the work area A, for example, the transfer path E from the end position of the middle division forming to the start position of the work block B is created. For the work block B where the combine harvester 1a performs the second and subsequent automatic harvesting traveling in the work area A, the transfer path E from the end position of the former work block B to the start position of the current work block B is created.

Also, as described above; to the server 101 via the communicator 33, the controller 31 of the portable terminal 30 sends the farm field information of the to-be-worked-on farm field of the combine harvesters 1a and 1b, the middle division information of each middle division set in the work area of the farm field, the work information of the respective work blocks allocated to the combine harvesters 1a and 1b, the transfer path to each work block allocated to the combine harvester 1a, and the travel path of each work block allocated to the combine harvester 1a. The server 101 managing these pieces of information makes it possible for the combine harvesters 1a and 1b to share, via the server 101, any data for performing the harvesting traveling in the farm field.

Next, the controller 50 of the combine harvester 1a will be described with reference to FIG. 3. The controller 50 is connected to the storage 51 that is composed of a computer such as CPU and includes ROM, RAM, hard disk drive flash memory and the like, and to the communicator 52 that communicates with the external device.

The storage 51 stores any program and data for controlling the various components and various functions of the combine harvester 1a and the controller 50 executes arithmetic operations based on the program and data stored in the storage 51, thereby to control the various components and various functions of the combine harvester 1a. The controller 50, for example, controls the positioner 28 thereby to acquire the positional information of the combine harvester 1a.

Via a wireless communication antenna, the communicator 52 enables a wireless communication with the external device such as the portable terminal 30. The controller 50 controls the communicator 52 thereby to perform the wireless communication with the portable terminal 30, and sends and receives various information to and from the portable terminal 30.

Also, the controller 50 executes the program stored in the storage 51 thereby to operate as a self-driving controller 53. The self-driving controller 53 realizes the working process of the work method according to the present invention.

The self-driving controller 53 controls the automatic harvesting traveling of the combine harvester 1a based on the travel path created for each work block allocated to the combine harvester 1a. The self-driving controller 53 receives, from the portable terminal 30 via the communicator 52, the farm field information of the to-be-worked-on farm field of the combine harvester 1a, the middle division information of each middle division set in the work area of the farm field, the work information of each work block allocated to the combine harvester 1a, the middle division path forming each middle division, the middle division transfer path to each middle division, the transfer path to each work block allocated to the combine harvester 1a, and the travel path of each work block allocated to the combine harvester 1a, and controls the automatic harvesting traveling based on these pieces of information.

First, based on the middle division information, middle division path and middle division transfer path of each middle division, the self-driving controller 53 controls the power 8, the travel portion 2 and the harvester 3, and performs the automatic harvesting traveling to form each middle division, that is, the section harvesting traveling. This forms a plurality of work blocks that divide the work area of the farm field. Also, the self-driving controller 53 controls the power 8 and the travel portion 2 based on the transfer path to each work block allocated to the combine harvester 1a, and executes the automatic traveling in such a manner as to transfer the combine harvester 1a to the start position of the work block where the automatic harvesting traveling is performed.

Then, based on the travel path's travel setting and work setting for each work block, the self-driving controller 53 controls the power 8, the travel portion 2 and the harvester 3, and has the above components perform the automatic traveling and automatic harvesting that accord to the travel path. While having the travel portion 2 allow the combine harvester 1a to perform the automatic traveling along the travel path, the self-driving controller 53 has the harvester 3 harvest the yet-to-be-harvested grain stalks on the travel path. care. Also, the self-driving controller 53, together with the automatic harvesting, controls the thresher 4, the sorter 5, the reservoir 6 and the discharged straw disposer 7, and has the above components automatically perform threshing of grain stalks after the harvesting, sorting of grains and straw scraps after the threshing, storing of the grain after the sorting, and disposing of the discharged straw after the threshing. Also, it is permitted that the combine harvester 1a includes a gyro sensor and an orientation sensor thereby to acquire any displacement information and orientation information of the combine harvester 1a, and the self-driving controller 53 adjusts the automatic traveling of the combine harvester 1a based on the displacement information and orientation information.

Note that the combine harvester 1b receives, from the combine harvester 1a's portable terminal 30 via the communicator 52, the farm field information of the to-be-worked-on farm field of the combine harvester 1b, the middle division information of each middle division set in the work area of the farm field, the work information of each work block allocated to the combine harvester 1b, the transfer path to each work block allocated to the combine harvester 1b, and the travel path of each work block allocated to the combine harvester 1b. The combine harvester 1b displays these pieces of information on monitors of the portable terminal 30 and operator 9 of the combine harvester 1b, the worker controls the operator 9 referring to these pieces of information, and the combine harvester 1b performs the harvesting traveling in response to the worker's manual driving.

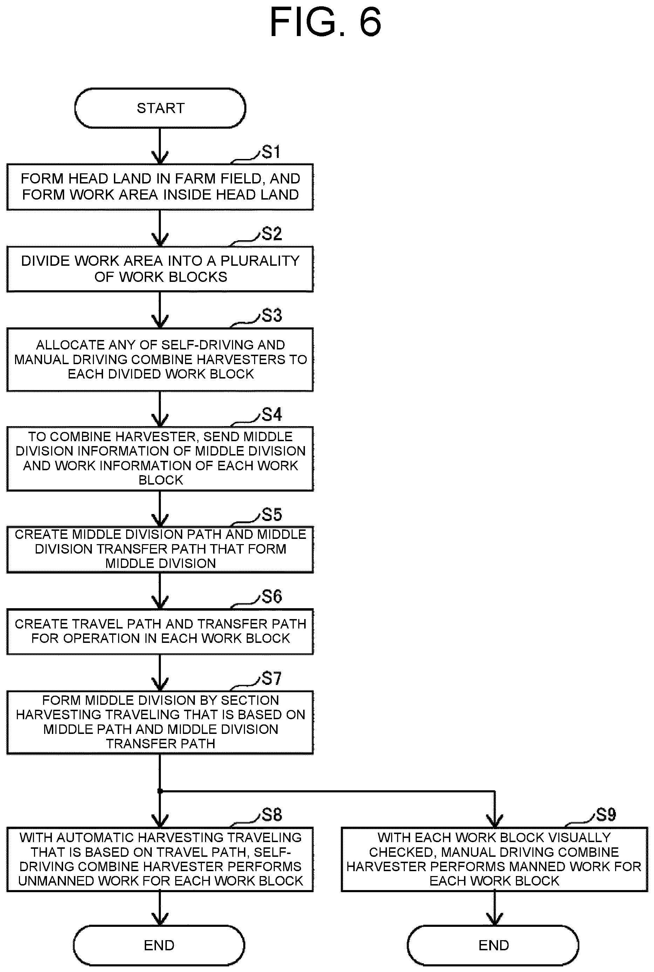

Next, an example of an operation in which the combine harvesters 1a and 1b perform the harvesting traveling in the farm field H is described with reference to a flowchart in FIG. 6. In the present operation example, the worker shall use the unmanned combine harvester 1a as the automatic traveling work vehicle, and the manually driven manned combine harvester 1b thereby to perform the harvesting traveling in the farm field H.

First, before the harvesting traveling by the combine harvesters 1a and 1b, the worker, based on the farm field information of the farm field H, allows the combine harvester 1a to perform an automatic linear traveling along the external peripheral shape of the farm field H, thereby to perform the harvesting traveling around the farm field H. This forms the head land D in the farm field H, and forms the work area A inside the head land D (step S1).

Next, the worker uses the work allocating screen 60 displayed on the display 34 of the portable terminal 30 of the combine harvesters 1a, thereby to select the combine harvesters 1a and 1b as the work vehicle for performing the harvesting traveling in the work area A, and to instruct to divide the work area A.

The work allocator 37 of the portable terminal 30 acquires the own machine information of the combine harvesters 1a and 1b, determines, based on the acquired own machine information, the number of middle divisions of the middle division C dividing the work area A and the number of blocks of a plurality of work blocks B, and determines the block width of each work block B to be divided. Then, based on the determined number of middle divisions and number of blocks, and block width, the work allocator 37 sets the middle division C in the work area A, and divides the work area A into a plurality of work blocks B (step S2). Also, the work allocator 37 allocates the combine harvester 1a or 1b to each divided work block B (step S3).

Also, the work allocator 37 sends, to the combine harvester 1a, the middle information of the set middle division C, and the work information of each work block B to which the combine harvester 1a is allocated, and sends, to the combine harvester 1b, the middle information, and the work information of each work block B to which the combine harvester 1b is allocated (step S4).

Next, the worker uses the travel path creating screen 70 displayed on the display 34 of the portable terminal 30 of the combine harvester 1a, thereby to instruct to create the travel path P. Based on the middle division information of the middle division C, the travel path creator 38 of the portable terminal 30 creates the middle division path F and the middle division transfer path G that form the middle division C (step S5). For each work block B allocated to the combine harvester 1a, the travel path creator 38 creates the travel path P, for example, in a manner to reciprocally harvest a plurality of routes (step S6). Also, the travel path creator 38 creates the transfer path E for transferring between respective work blocks B. To the combine harvester 1a, the travel path creator 38 sends the created middle division path F and middle division transfer path G, as well as transfer path E and travel path P.

Also, the worker uses the work screen displayed on the display 34 of the portable terminal 30 of the combine harvester 1a, and thereby makes an instruction for the automatic harvesting traveling of each work block B allocated to the combine harvester 1a. Based on the middle division path F and middle division transfer path G received from the portable terminal 30, the self-driving controller 53 of the combine harvester 1a controls the section harvesting traveling, thereby to form the middle division C in the work area A (step S7). Also, the self-driving controller 53 controls the automatic harvesting traveling based on the transfer path E and travel path P received from the portable terminal 30, and the unmanned combine harvester 1a performs the automatic harvesting traveling of each work block B (step S8).

Also, the worker on the combine harvester 1b refers to the middle division information received from the portable terminal 30 of the combine harvester 1a, and the work information of each work block B allocated to the combine harvester 1b, thereby to visually check the middle division C and each work block B where the combine harvester 1b performs the harvesting traveling. Then, the worker manually drives the combine harvester 1b while visually checking each work block B allocated to the combine harvester 1b, and the manned combine harvester 1b performs the harvesting traveling of each work block B (step S9).

As described above, according to the first embodiment, the combine harvester 1a, which works in the farm field in cooperation with the combine harvester 1b, is the work vehicle capable of automatically traveling based on the travel path created in the farm field, and includes the portable terminal 30 that functions as the work allocator 37 which divides the work area of the farm field into a plurality of work blocks based on the combine harvesters 1a and 1b, and which allocates any of the combine harvesters 1a and 1b to each work block, and the controller 50 that functions as the self-driving controller 53 which performs the work of the work block allocated to the combine harvester 1a.

Also, according to the first embodiment, the work method of a plurality of work vehicles including at least one combine harvester 1a as an automatic traveling work vehicle capable of automatically traveling based on a travel path created in a farm field includes: an allocating process that divides a work area of the farm field into a plurality of work blocks based on each of the work vehicles, and that allocates any of the plurality of work vehicles to each of the work blocks, and a working process that allows the plurality of work vehicles to perform any work of the plurality of work blocks.

With this, when the farm field is subjected to the work with a plurality of work vehicles such as the combine harvesters 1a and 1b in cooperation, the work area of the farm field is divided into a plurality of work blocks based on each work vehicle, so that the work that is suitable for the performance of each work vehicle can be performed in the applicable work block. Thus, a plurality of work vehicles can efficiently travel and work.

According to the first embodiment, the allocating process, based on the work width of each work vehicle, divides the work area into a plurality of work blocks and allocates the work vehicle to the work block. For example, according to the first embodiment, the allocating process, when the work width of each work vehicle is different, divides the work area into work blocks of different sizes, and allocates the work vehicle with a larger work width to the larger work block.

More specifically, the plurality of work vehicles includes the combine harvesters 1a and 1b, and, when the combine harvesters 1a and 1b are different in the number of harvestable strips constituting the respective work widths, the allocating process divides the work area into the work blocks of different sizes and allocates the combine harvester 1a or 1b, that has the larger number of harvestable strips, to the larger work block.

This divides the work area of the farm field into a plurality of work blocks based on the work width of each work vehicle, so that work suitable for the work width of each work vehicle can be performed in each work block. Thus, each of a plurality of work vehicles can efficiently travel and work in the applicable work block.

The above first embodiment has described the example in which, the work allocator 37 of the portable terminal 30 of the combine harvester 1a, based on the work widths (the number of harvestable strips) of the combine harvesters 1a and 1b (harvestable) as the own machine information of the combine harvesters 1a and 1b, determines the number of middle divisions and the block width thereby to divide the work area into a plurality of work blocks, and allocates the combine harvesters 1a and 1b to the respective work blocks. In a first improved example of the first embodiment and according to the claimed invention, it is permitted that, based on the available capacity of the grain tank 23 of the reservoir 6 that reserves the grain harvested by the combine harvesters 1a and 1b, as the own machine information of the combine harvesters 1a and 1b, the work allocator 37 determines the number of middle divisions and the block width thereby to divide the work area into a plurality of work blocks, and allocates the combine harvester 1a or 1b to the applicable work block.

In this case, the work allocator 37, based on the work width (the number of harvestable strips) and the reservoir 6 (grain tank 23)'s available capacity of the combine harvester 1a, calculates the number of routes fulfilling the reservoir 6 (grain tank 23) of the combine harvester 1a, and sets, for the combine harvester 1a, the work block including the number of calculated routes. If the grain tank 23 is fulfilled in the middle of the last route, the number of routes may be calculated by subtracting one for the last route. The work block including the number of calculated routes may be a single work block or may be divided into two or more work blocks. When calculating the number of routes, the amount of grains acquired from the middle division automatic harvesting traveling that divides the work block is subtracted from the available capacity of the grain tank 23. In the same way, the work allocator 37 calculates the number of routes fulfilling the grain tank 23 of the combine harvester 1b, and sets, for the combine harvester 1b, the work block including the calculated number of routes.

Alternatively, it is permitted that the work allocator 37 preliminarily divides the work area into work blocks of different sizes, and allocates, to the larger work block, the combine harvester 1a or 1b with more available capacity of the reservoir 6 (grain tank 23).

With this, if the combine harvester 1a or 1b has more available capacity in the reservoir 6 (grain tank 23), the automatic harvesting traveling of the larger work block is performed, thus making it possible to improve the work efficiency. For example, the end of the automatic harvesting traveling of the work block can be timed to coincide with the discharging of the grain stored in the grain tank 23, so that the automatic harvesting traveling's intermission attributable to the grain tank 23 being full in the middle of the work block is prevented, making it possible to improve the work efficiency.

The above first embodiment has described the example in which, the work allocator 37 of the portable terminal 30 allocates the combine harvester 1a or 1b to each work block, and thereafter the self-driving controller 53 executes the section harvesting traveling that forms each middle division. In a second improved example of the first embodiment, it may be so configured that, the self-driving controller 53 performs the section harvesting traveling that forms each middle division, and thereafter the work allocator 37 of the portable terminal 30 allocates the combine harvester 1a or 1b to each work block.

In this case, the work allocator 37, based on the own machine information of the combine harvesters 1a and 1b, sets the number of middle divisions for dividing the work area, and the block width of the work block divided by the middle dividing, and then stores, in the storage 32, the middle division information calculated based on the number of middle divisions and the block width, and sends the middle division information to the combine harvester 1a via the communicator 33.

In the combine harvester 1a, the self-driving controller 53 of the controller 50 receives the middle division information from the portable terminal 30, and executes the section harvesting traveling that forms each middle division based on the middle division information. This creates the work block in the work area, and the work block having the block width for the combine harvester 1a and the work block having the block width for the combine harvester 1b becomes visually identifiable. When the section harvesting traveling is ended, the self-driving controller 53, via the communicator 52, notifies the portable terminal 30 of the ending of the section harvesting traveling, and the work allocator 37 of the portable terminal 30, in a state of a plurality of work blocks formed in the work area, allocates the combine harvester 1a or 1b to each work block, stores the work information of each work block in the storage 32, and sends the work information to the combine harvesters 1a and 1b via the communicator 33.

According to the second improved example of the above first embodiment, the workers of the combine harvesters 1a and 1b, while visually checking the work blocks respectively allocated to the combine harvesters 1a and 1b, can shift to the harvesting traveling, making it easier to perform the harvesting travelling of the work block, especially, in the manned combine harvester 1b that performs the manual driving.

In a third improved example of the first embodiment, it is permitted that the work allocator 37 of the portable terminal 30 divides the wok area into a plurality of work blocks so that the section harvesting traveling is performed from the one end side to the other end side in the width direction of the work area of the farm field, and allocates, to the work block at the other end side, the combine harvester 1a as the automatic traveling work vehicle. In this case, the self-driving controller 53 of the combine harvester 1a performs the automatic harvesting traveling from the work block at the other end side. In other words, the work allocator 37 sets the middle division forming order so that the middle block which divides the work block for the first automatic harvesting traveling is formed last.

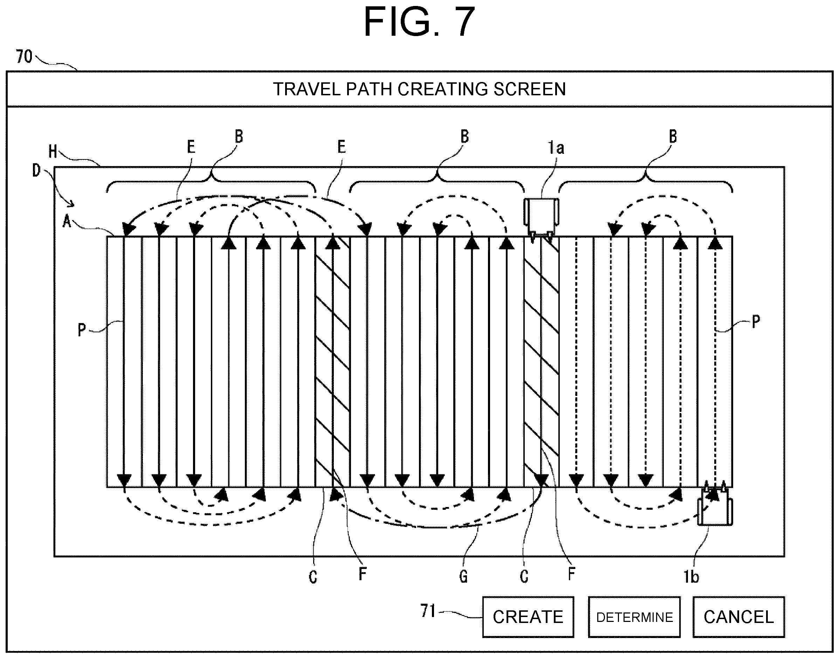

For example, as shown in FIG. 7, when forming the head land D by the harvesting traveling along the external peripheral shape of the farm field H, the combine harvester 1a ends the head land forming at the one end side (right side of FIG. 7) in the width direction of the work area A. Here, when setting two or more middle divisions C for the work area A thereby to divide the work area A into a plurality of work blocks B, the work allocator 37 determines the middle division forming order so that each middle division C is formed from the one end side to the other end side (left side in FIG. 7) in the width direction of the work area A and sets the middle division information. When allocating two or more work blocks B to the combine harvester 1a, the work allocator 37 allocates the combine harvester 1a to the work block B at the other end side in the width direction of the work area A, and determines the work order so that the automatic harvesting traveling is performed from the work block B at the other end side and sets the work information.

When the work allocator 37 sends this division information to the combine harvester 1a, the combine harvester 1a, according to the middle division forming order of the middle division information, performs the section harvesting traveling so that each middle division C is formed from the one end side to the other end side in the width direction of the work area A. When the work allocator 37 sends this work information to the combine harvester 1a, the combine harvester 1a, according to the work order of the work information, performs the automatic harvesting traveling from the work block B at the other end side in the width direction of the work area A.

According to the third improved example of the first embodiment, the combine harvester 1a, with the empty traveling distance from the section harvesting traveling to the automatic harvesting traveling being short, can improve the driving efficiency and work efficiency.

By the way, in the above first embodiment, the travel path creator 38 of the portable terminal 30 creates, in the head land at the one side or the other side of the farm field in the strip direction, the transfer path where the combine harvester 1a or 1b transfers between the two work blocks; therefore, which of the head land on the one side or the other side in the strip direction the transfer path is set on is determined by the number of routes included in each work block.

For example, when the work block includes an even number of routes, setting the start position of the above work block at the one side in the strip direction sets the end position of the work block also at the one side in the strip direction, whereas when the work block includes an odd number of routes, setting the start position of the above work block at the one side in the strip direction sets the end position of the work block at the other side in the strip direction. Thus, when the work block composed of an odd number of routes is included, the transfer path will be set for both the head land at the one side in the strip direction and the head land at the other side in the strip direction.

Then, in a fourth improved example of the first embodiment, the work allocator 37 of the portable terminal 30 divides the work area into a plurality of work blocks by configuring each work block with an even number of routes, so that the transfer path for transferring between the work blocks is set at only one side of the farm field in the strip direction.

According to the fourth improved example of the first embodiment, the worker can organize and form the transfer path as well as the travel path for the harvesting traveling in the work area, and also can efficiently transfer the combine harvesters 1a and 1b relative to the farm field's entrance-and-exit and the grain discharge position which are provided at the one side of the farm field in the strip direction.

The above first embodiment has described the example in which, for forming the head land in the farm field and forming the work area inside the head land before the automatic harvesting traveling is performed, the one combine harvester 1a turns along the external circumference of the farm field. In the fifth improved example of the first embodiment, it is permitted that two combine harvesters 1a and 1b perform the harvesting traveling by turning along the external peripheral shape of the farm field thereby to form the head land and the work area.

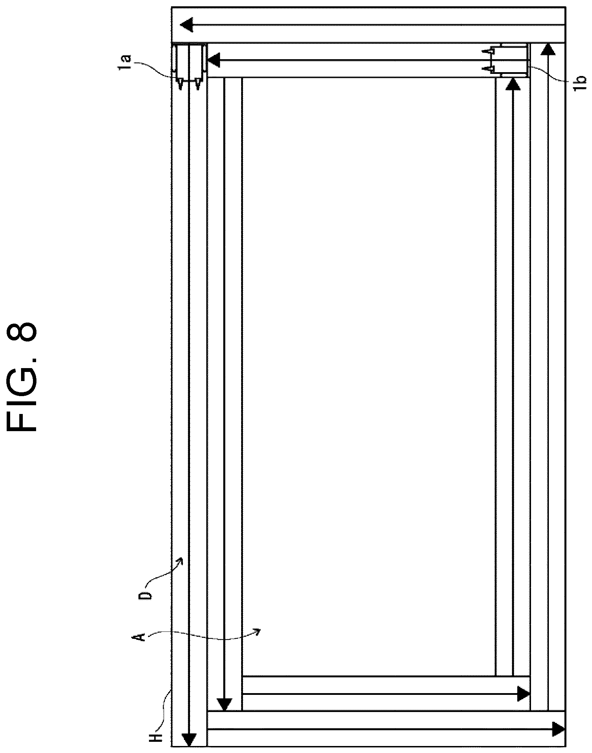

For example, as shown in FIG. 8, it is permitted that one worker, with the combine harvester 1a, performs the harvesting traveling (e.g., automatic linear traveling) along the outermost peripheral shape of the farm field, whereas another operator, with the combine harvester 1b, performs the harvesting traveling (e.g., automatic linear traveling) along the travel track of the combine harvester 1a. In this case, it is permitted that when the combine harvester 1a ends the linear traveling at the first side (right side of FIG. 8) of the farm field H and then starts the linear traveling at the next second side (left side of FIG. 8), the combine harvester 1b starts the linear traveling along the combine harvester 1a's travel tack along the first side.

In a second embodiment, the portable terminal 30 may make it possible to select which of the combine harvesters 1a and 1b is to be allocated to each work block made by dividing the work area. In the description of the second embodiment, the same symbol as in the first embodiment is given to the same component as in the first embodiment, and description of the same symbol is to be omitted.

For example, based on the own machine information of the combine harvesters 1a and 1b' and in view of the trade-off between the number of middle divisions and the block width, the work allocator 37 calculates the total number of blocks of a plurality of work blocks and the number of middle blocks, so that the turning time and turning distance between adjacent routes in each work block and the empty traveling distance in the head land become shorter. Alternatively, on the work allocating screen 60 of the display 34, the work allocator 37 may allow the total number of blocks of a plurality of work blocks and the number of middle blocks to be entered.

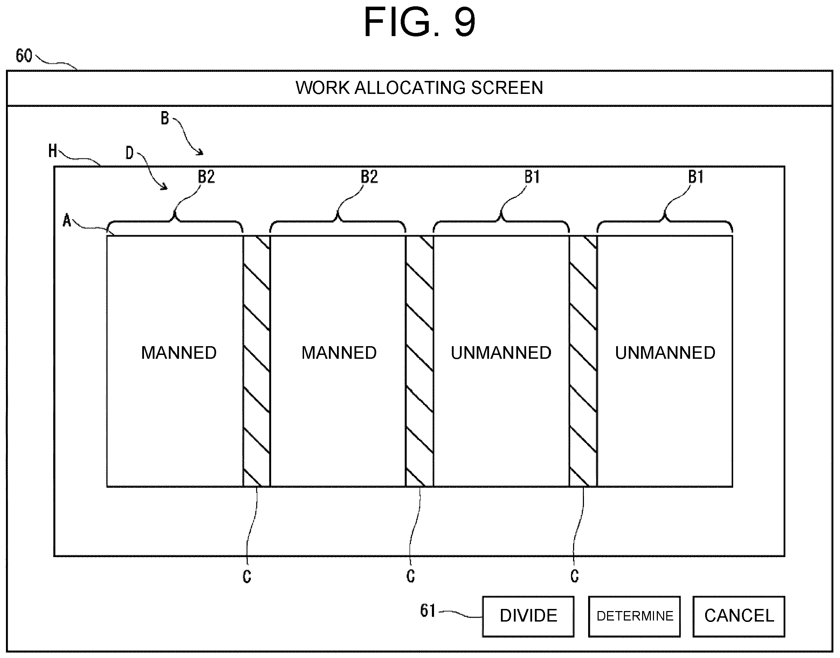

As shown in FIG. 9, in a state where the calculated number of work blocks B of the total number of blocks are arranged in the width direction of the work area A, the work allocator 37 selectably displays the work blocks on the work allocating screen 60 of the display 34. At this time, the work allocator 37 may calculate the number of routes of each work block B by dividing the total number of routes in the work area A by the total number of blocks. In the initial state of the work allocating screen 60, the combine harvesters 1a and 1b shall not be allocated to the respective work blocks B. On the work allocating screen 60, each work block B is, according to the selecting operation, for example, each time a touch operation is performed, switched between a first work block B1 allocated to the combine harvester 1a for the unmanned work, and a second work block B2 allocated to the combine harvester 1b for the manned work.

On the work allocating screen 60, when the work blocks B of the total number of blocks are selected as the one or more first work blocks B1 and the one or more second work block B2, and a determining button's operation, etc. fixes placement of the first work block B1 and second work block B2, the work allocator 37 divides the work area A into a plurality of work blocks B in a state of being displayed on the work allocating screen 60. Based on the fixed placement of the first work block B1 and second work block B2, the work allocator 37 calculates each middle division C's middle division information such as position, each first work block B1's work information such as position and block width, and each second work block B2's work information such as position and block width.

When the work allocator 37 sends the middle division information and the work information to the combine harvesters 1a and 1b, the self-driving controller 53 of the combine harvester 1a performs the automatic harvesting traveling of each work block B based on the middle division information and the work information. In addition, the combine harvester 1b displays the middle division information and the work information on monitors of the portable terminal 30 and operator 9 of the combine harvester 1b, the worker controls the operator 9 referring to these pieces of information, and the combine harvester 1b performs the harvesting traveling in response to the worker's manual driving.

According to the second embodiment, the worker can feely select which of the combine harvesters 1a and 1b is allocated to each work block B, making it possible to improve freedom of the work.

The second embodiment has described the example in which, with the initial state defined as a state where none of the combine harvesters 1a and 1b is allocated to each work block, the work allocator 37 selectably displays, on the work allocating screen 60, the work blocks of the total number of work blocks. In another example of the second embodiment, with the initial state defined as a state where the combine harvester 1a or 1b is tentatively allocated to each work block, the work allocator 37 may selectably display, on the work allocating screen 60, the work blocks of the total number of work blocks.

In this case, first, regarding the work blocks B of the total number of blocks, the work allocator 37 tentatively sets the number of first work blocks of the first work block B1 allocated to the combine harvester 1a, and the number of second work blocks of the second work block B2 allocated to the combine harvester 1b, and temporarily places the first work block B1 and the second work block B2. For example, the work allocator 37 tentatively sets the number of first blocks and the number of second blocks by equally dividing the total number of blocks, and tentatively places the first work block B1 at one end side in the width direction and the second work block B2 at the other end side in the width direction. When the total number of work blocks is odd, the number of first blocks may be tentatively set to be one more than the number of second blocks.

Also, in a state where the first work block B1 and the second work block B2 are tentatively placed, the work allocator 37 selectably displays the work blocks B of the total number of blocks on the work allocating screen 60 displayed on the display 34, and each work block B can be switched between the first work block B1 and second work block B2 according to the selecting operation.

In another example of the second embodiment as well, on the work allocating screen 60, when the work blocks B of the total number of blocks are selected as the one or more first work blocks B1 and the one or more second work blocks B2, and the determining button's operation, etc. fixes placement of the first work block B1 and second work block B2, the work allocator 37 divides the work area into a plurality of work blocks B in a state of being displayed on the work allocating screen 60.

In a third embodiment, the portable terminal 30 may allow the shape of each work block, which divides the work area, to be selectable. In the description of the third embodiment, the same symbol as in the first embodiment is given to the same component as in the first embodiment, and description of the same symbol is to be omitted.

For example, with the initial state defined as the state where the number of middle divisions and the total number of blocks of the work block are not set, i.e., the state where the work area is not divided into a plurality of work blocks, the work allocator 37 displays the work area on the work allocating screen 60 on the display 34. In this case, on the work allocating screen 60, the work allocator 37 allows the number of middle divisions or the total number of blocks to be entered, and allows the number of routes of each block to be entered.

As in the example shown in FIG. 9, in the state where a plurality of work blocks B based on the inputted number of middle divisions or the inputted total number of blocks is arranged in the width direction of the work area A, the work allocator 37 selectably displays the work blocks on the work allocating screen 60 of the display 34. With a plurality of work blocks B displayed on the work allocating screen 60, the work allocator 37 may allow the number of middle divisions, or the total number of blocks and the number of routes of each work block B to be further editable.

As in the second embodiment, in the initial state of the work allocating screen 60, the combine harvesters 1a and 1b shall not be allocated to the respective work blocks B. On the work allocating screen 60, each work block B is, according to the selecting operation, switched between the first work block B1 allocated to the combine harvester 1a, and the second work block B2 allocated to the combine harvester 1b. On the work allocating screen 60, when the determining button's operation, etc. fixes placement of the first work block B1 and second work block B2, the work allocator 37 divides the work area A into a plurality of work blocks B in a state of being displayed on the work allocating screen 60.

Also, as in the second embodiment, based on the fixed placement of the first work block B1 and the second work block B2, the work allocator 37 calculates each middle division C's middle division information such as position, each first work block B1's work information such as position and block width, and each second work block B2's work information such as position and block width. The work allocator 37 sends the calculated middle division information and work information to the combine harvesters 1a and 1b, and the combine harvesters 1a and 1b receive the middle division information and the work information and use the above information for the harvesting traveling in each work block B.

According to the third embodiment, the worker can freely select the shape of each work block to which any of the combine harvesters 1a and 1b is allocated, making it possible to improve freedom of the work.

The third embodiment has described the example in which, with the initial state defined as the state where the work area A is not divided into a plurality of work blocks B, the work allocator 37 displays the work area A on the work allocating screen 60 of the display 34. In another example of the third embodiment, with the initial state defined as a state where the work area is equally divided by the predetermined number of middle divisions thereby to be divided into a plurality of work blocks, the work allocator 37 may display the work area on the work allocating screen 60 of the display 34.

For example, the work allocator 37 counts the total number of routes in the work area A, and equally divides the work area A by dividing the total number of routes by a predetermined number of blocks. Note that even in this case, in the initial state of the work allocating screen 60, the combine harvesters 1a and 1b shall not be allocated to the respective work blocks B.

Alternatively, in a further example of the third embodiment, as in the other example of the above second embodiment, with the initial state defined as a state where the combine harvesters 1a or 1b is tentatively allocated to each work block B, the work allocator 37 may selectably display, on the work allocating screen 60, the work blocks B of the total number of blocks.

First, regarding the work blocks B of the total number of blocks, the work allocator 37 tentatively sets the number of first work blocks of the first work block B1 allocated to the combine harvester 1a, and the number of second work blocks of the second work block B2 allocated to the combine harvester 1b, and temporarily places the first work block B1 and the second work block B2.

Also, in a state where the first work block B1 and the second work block B2 are tentatively placed, the work allocator 37 selectably displays the work blocks B of the total number of blocks on the work allocating screen 60 displayed on the display 34, and each work block B can be switched between the first work block B1 and second work block B2 according to the selecting operation.

In another example of the third embodiment as well, on the work allocating screen 60, when the work blocks B of the total number of blocks are selected as the one or more first work blocks B1 and the one or more second work blocks B2, and the determining button's operation, etc. fixes placement of the first work block B1 and second work block B2, the work allocator 37 divides the work area A into a plurality of work blocks B in a state of being displayed on the work allocating screen 60.

The above embodiment has described the example in which the work vehicle is composed of the self-threshing type combine harvester 1a or 1b, but the work vehicle may be composed of riding work vehicles such as a normal combine harvester, a tractor, a riding grass mower, a riding rice transplanter, a conveyer, a snowplow, a wheel loader, as well as unmanned work vehicles such as unmanned grass mower. For example, when the work vehicle is composed of the tractor, as the own machine information of the tractor as the work vehicle, the work width is the work width of a cultivator mounted to the rear portion of the tractor.

The present invention is defined in the claims.

### REFERENCE SIGNS LIST

1a, 1b: combine harvester (work vehicle)
6: reservoir
9: operator
30: portable terminal
31: controller
36: farm field information setter
37: work allocator
38: travel path creator
50: controller
53: self-driving controller
100: work system
101: server
23: grain tank

## Claims

1. A work method of a plurality of work vehicles including at least one automatic traveling work vehicle (1a, 1b) capable of automatically traveling based on a travel path created in a farm field, the method comprising:
an allocating process that divides a work area (A) of the farm field into a plurality of work blocks (B) based on each of the work vehicles, and that allocates any of the plurality of work vehicles to each of the work blocks (B); and
a working process that allows the plurality of work vehicles to perform a work of the plurality of work blocks (B),
whereby the plurality of work vehicles is a plurality of combine harvesters (1a, 1b),
**characterized in that**
the combine harvesters (1a, 1b) are different in available capacity of a reservoir (6) for reserving a grain harvested by each of the combine harvesters,
and the allocating process, based on the available capacity of the reservoir of each of the combine harvesters (1a, 1b), divides the work area (A) into the plurality of work blocks (B) and allocates the combine harvesters to the work blocks (B).

2. A work system (100) with a plurality of work vehicles (1a, 1b) including at least one automatic traveling work vehicle capable of automatically traveling based on a travel path created in a farm field, the work system comprising:
a work allocator,
wherein the work allocator and the plurality of work vehicles are configured to implement the method of claim 1.

## Patentansprüche

1. Arbeitsverfahren für eine Vielzahl von Arbeitsfahrzeugen, die mindestens ein automatisch fahrendes Arbeitsfahrzeug (1a, 1b) umfassen, das in der Lage ist, basierend auf einem auf einem Ackerfeld erzeugten Fahrweg automatisch zu fahren, wobei das Verfahren umfasst:
einen Zuweisungsprozess, der einen Arbeitsbereich (A) des Ackerfelds basierend auf jedem der Arbeitsfahrzeuge in eine Vielzahl von Arbeitsblöcken (B) teilt und der ein beliebiges von der Vielzahl von Arbeitsfahrzeugen zu jedem der Arbeitsblöcke (B) zuweist; und
einen Arbeitsprozess, der es der Vielzahl von Arbeitsfahrzeugen ermöglicht, eine Arbeit auf der Vielzahl von Arbeitsblöcken (B) durchzuführen,
wobei die Vielzahl von Arbeitsfahrzeugen eine Vielzahl von Mähdreschern (1a, 1b) ist,
**dadurch gekennzeichnet, dass** die Mähdrescher (1a, 1b) sich hinsichtlich der verfügbaren Kapazität eines Behälters (6) zum Speichern eines Getreides, das von jedem der Mähdrescher geerntet wird, unterscheiden,
und der Zuweisungsprozess basierend auf der verfügbaren Kapazität des Behälters von jedem der Mähdrescher (1a, 1b) den Arbeitsbereich (A) in die Vielzahl von Arbeitsblöcken (B) unterteilt und die Mähdrescher zu den Arbeitsblöcken (B) zuweist.

2. Arbeitssystem (100) mit einer Vielzahl von Arbeitsfahrzeugen (1a, 1b), die mindestens ein automatisches Arbeitsfahrzeug umfassen, das in der Lage ist, basierend auf einem auf einem Ackerfeld erzeugten Fahrweg automatisch zu fahren, wobei das Arbeitssystem umfasst:
eine Arbeitszuweisungseinrichtung;
wobei die Arbeitszuweisungseinrichtung und die Vielzahl von Arbeitsfahrzeugen dazu ausgestaltet sind, das Verfahren nach Anspruch 1 zu implementieren.

## Revendications

1. Procédé de travail d'une pluralité de véhicules de travail comportant au moins un véhicule de travail (1a, 1b) à déplacement automatique en mesure de se déplacer automatiquement sur la base d'un trajet de déplacement créé dans un champ agricole, le procédé comprenant :
un processus d'attribution qui divise une zone de travail (A) du champ agricole en une pluralité de blocs de travail (B) en fonction de chacun des véhicules de travail, et qui attribue l'un quelconque de la pluralité de véhicules de travail à chacun des blocs de travail (B) ; et
un processus de travail qui permet à la pluralité de véhicules de travail d'effectuer un travail de la pluralité de blocs de travail (B), la pluralité de véhicules de travail étant une pluralité de moissonneuses-batteuses (1a, 1b),
**caractérisé en ce que**
les moissonneuses-batteuses (1a, 1b) ont chacune un réservoir (6) avec une capacité disponible différente pour la réserve des céréales récoltées par chacune des moissonneuses-batteuses, et le processus d'attribution, en se basant sur la capacité disponible du réservoir de chacune des moissonneuses-batteuses (1a, 1b), divise la zone de travail (A) en la pluralité de blocs de travail (B) et attribue les moissonneuses-batteuses aux blocs de travail (B).

2. Système de travail (100) ayant une pluralité de véhicules de travail (1a, 1b) comportant au moins un véhicule de travail à déplacement automatique en mesure de se déplacer automatiquement sur la base d'un trajet de déplacement créé dans un champ agricole, le système de travail comprenant :
un attributeur de travail,
dans lequel l'attributeur de travail et la pluralité de véhicules de travail sont configurés pour mettre en œuvre le procédé selon la revendication 1.
